# EUROPÄISCHE PATENTSCHRIFT

(11) **EP 3 035 600 B1**
(45) Veröffentlichungstag und Bekanntmachung des Hinweises auf die Patenterteilung: **16.05.2018**
(21) Anmeldenummer: 14198222.3
(22) Anmeldetag: 16.12.2014
(51) Int. Cl.: H04L 12/26

(54) **Verfahren zur Diagnose der Erreichbarkeit von Netzwerkteilnehmern, Netzwerkteilnehmer und IP-basiertes Netzwerk**
Method for diagnosing the accessibility of network participants, network participants and IP-based network
Procédé de diagnostic d'accessibilité d'utilisateurs de réseau, utilisateurs de réseau et réseau IP

(43) Veröffentlichungstag der Anmeldung: 22.06.2016
(73) Patentinhaber: Siemens Aktiengesellschaft, 80333 München (DE)
(72) Erfinder: Albrecht, Harald, Dr., 90475 Nürnberg (DE)

(56) Entgegenhaltungen:
- NARTEN IBM E NORDMARK SUN MICROSYSTEMS W SIMPSON DAYDREAMER H SOLIMAN ELEVATE TECHNOLOGIES T: "Neighbor Discovery for IP version 6 (IPv6); rfc4861.txt", 20070901, 1. September 2007 (2007-09-01), XP015052407, ISSN: 0000-0003
- Anonymous: "IPv6 in der Automatisierungstechnik - White Paper", , 1. Februar 2013 (2013-02-01), Seiten 1-13, XP055140595, Gefunden im Internet: URL:http://www.siemens.com/press/pool/de/m aterials/industry/iia/whitepapers/whitepap er-ipv6-d.pdf [gefunden am 2014-09-16]
- KIVINEN SAFENET T ET AL: "Design of the MOBIKE Protocol; draft-ietf-mobike-design-02.txt", 20050220, Bd. mobike, Nr. 2, 20. Februar 2005 (2005-02-20), XP015038651, ISSN: 0000-0004
- CHOWN T J ET AL: "Considerations for IPv6 Address Selection Policy Changes; draft-ietf-6man-addr-select-considerations -05.txt", CONSIDERATIONS FOR IPV6 ADDRESS SELECTION POLICY CHANGES; DRAFT-IETF-6MAN-ADDR-SELECT-CONSIDERATIONS -05.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 1. April 2013 (2013-04-01), Seiten 1-18, XP015091698, [gefunden am 2013-04-01]

## Beschreibung

Die Erfindung betrifft ein Verfahren zur Diagnose der Erreichbarkeit von Netzwerkteilnehmern in einem IP-basierten Netzwerk, in dem jedem der Netzwerkteilnehmer in einem oder mehreren Adressbereichen zumindest eine jeweilige Adresse zuweisbar ist, unter der der betreffende Netzteilnehmer für einen anderen Netzwerkteilnehmer erreichbar ist. Die Erfindung betrifft ferner einen das Verfahren ausführenden Netzwerkteilnehmer sowie ein IP-basiertes Netzwerk, insbesondere ein IPv6-basiertes Netzwerk.

Ein solches Netzwerk umfasst einen ersten Netzwerkteilnehmer, dem in zumindest einem der Adressbereiche eine jeweilige erste Adresse zugewiesen ist, wobei durch eine in dem ersten Netzwerkteilnehmer gespeicherte Richtlinie (eine sogenannte Address Selection Policy, ASP) festgelegt ist, welcher der zugewiesenen ersten Adressen für eine Kommunikation mit den anderen Netzwerkteilnehmern zu verwenden ist. Ferner umfasst das Netzwerk einen zweiten Netzwerkknoten, dem in zumindest einem der Adressbereiche eine jeweilige zweite Adresse zugewiesen ist, wobei durch eine in dem zweiten Netzwerkteilnehmer gespeicherte zweite Richtlinie festgelegt ist, welche der zugewiesenen zweiten Adressen für eine Kommunikation mit den anderen Netzwerkteilnehmern zu verwenden ist. Die erste und die zweite Richtlinie stellen jeweilige lokale Richtlinien für den ersten bzw. zweiten Netzwerkteilnehmer dar. Diese sind auch unter dem Namen "Address Selection Policy", ASP bekannt. Die Richtlinien sind sinnvoller Weise innerhalb des Netzwerkes gleichartig. IETF Standards RFC4861 offenbart, dass auf Basis des Neighbor Discovery Protocol bzw. Neighbor Solicitations und Neighbor Advertisments erreichbare IPv6-Netzknoten ermittelt werden können. Bei auf IPv6-basierenden Netzwerken können an einem einzelnen Netzwerkteilnehmer gleichzeitig mehrere Adressen in mehreren Adressbereichen (sogenannten Adress-Ebenen) im Einsatz sein.

Dies wird in der Praxis insbesondere in kleineren industriellen Automatisierungsnetzwerken mit Zugang zum Internet genutzt. Typischerweise sind dabei vier Adressbereiche gleichzeitig in Verwendung, nämlich ein Stück LLA (Link-Local Address), ein Stück ULA (Unique Local Address) sowie zwei Stück GUAs (Global Unicast Address). Die Verwendung mehrerer Adressbereiche gleichzeitig ermöglicht beispielsweise im Umfeld von industriellen Automatisierungsnetzwerken, aber auch in anderen Anwendungen, getrennte Adressen für IT-Komponenten sowie für Automatisierungskomponenten. Beispielweise können für IT-Komponenten globale Adressen für Service-Tätigkeiten von außerhalb des Automatisierungsnetzwerks bereitgestellt werden, während die der Automatisierung zugewiesenen Adressen ohne Planungsvorgänge der IT einsehbar und administrierbar sind. Insbesondere können Automatisierungsadressen autark, d.h. ohne Nutzung oder Kontrolle von IT-Fachleuten, benutzt und administriert werden. Netzwerke der oben bezeichneten Art sind derzeit derart strukturiert, dass ein Zugriff auf für die Automatisierung reservierte Adressen nur vor Ort möglich ist. Eine Fernwartung von außerhalb des Netzwerks ist nicht möglich.

Grundsätzlich wäre es jedoch wünschenswert, wenn in Zukunft beispielsweise für Remote-Dienstleistungen vorübergehend weitere, zusätzliche Adressen bzw. Adressbereiche aktiv geschaltet werden können, um auf diese Weise externen Netzwerkteilnehmern einen zeitweiligen Zugang zu einer eingeschränkten Menge von Netzwerkteilnehmern, wie z.B. Automatisierungsgeräten, zu erlauben.

Die grundsätzliche Erreichbarkeit von Netzwerkteilnehmern, wie z.B. Automatisierungskomponenten, in einem auf IP4v-basierten Netzwerk wird mit einem sog. Pings nutzenden Diagnose-Werkzeug überprüft. Ist der Ping erfolgreich, so ist auch die grundsätzliche Erreichbarkeit des Gerätes gegeben. Allerdings wird in IP-Netzwerken regelmäßig nur ein Adressbereich benutzt, wodurch es einfach ist, zu überprüfen, ob zwei Netzwerkteilnehmer unter einander kommunizieren können. Dazu wird von einem weiteren Netzwerkteilnehmer, wie z.B. einem Diagnoserechner, jeder Netzwerkteilnehmer einzeln per Ping überprüft. Technisch erfolgt dies mittels sogenannter ICMP Echo-Nachrichten. Werden von dem Diagnoserechner die Netzwerkteilnehmer erreicht, so können diese in dem IPv4-Netzwerk auch untereinander kommunizieren.

Bei IPv6-Netzwerken ist dieser starre und einfache Schluss in der Regel nicht möglich. Der Grund ist, dass ein Netzwerkteilnehmer, um mit einem anderen Netzwerkteilnehmer zu kommunizieren, eine Auswahl zwischen den zur Verfügung stehenden Adressen auf Seiten der beiden Netzwerkteilnehmer treffen muss. Diese Wahl wird zudem durch die, auf den Netzwerkteilnehmern lokal vorgehaltenen Richtlinien beeinflusst. Diese sind innerhalb eines Netzwerkes für alle Netzwerkteilnehmer sinnvoller Weise gleichartig. Aufgrund von Konfigurationsfehlern oder lokalen Erfordernissen können sich diese jedoch auch unterscheiden.

Dies führt dazu, dass bei einer Überprüfung der Erreichbarkeit von Netzwerkteilnehmern in der oben beschriebenen Art und Weise in einem IPv6-Netzwerk durch den Diagnoserechner eine einwandfreie Erreichbarkeit der beiden Netzwerkteilnehmer gegeben sein kann. Dennoch kann der Verbindungsaufbau und damit die Kommunikation zwischen den Netzwerkteilnehmern gestört sein, da nicht der tatsächliche Kommunikationspfad zwischen den Netzwerkteilnehmern sowie die auf den jeweiligen Netzwerkteilnehmern gespeicherten Richtlinien überprüft werden. Die auf den Netzwerkteilnehmern installierten Anwendungen müssen diese Nebenbedingungen jedoch beachten.

Die Überprüfung des tatsächlichen Kommunikationspfads zwischen den beiden Netzwerkteilnehmern erfordert eine technische Einrichtung vor Ort, d.h. der Diagnoserechner muss zur Überprüfung direkt an zumindest einen der beiden Netzwerkteilnehmer angeschlossen werden. Aufgrund der in einem industriellen Automatisierungsnetzwerk oftmals großen Distanzen zwischen den einzelnen Netzwerkteilnehmern ist dies in der Regel nicht praktikabel. Aber auch dann, wenn der Diagnoserechner vor Ort verfügbar ist, um von dem einen Netzwerkteilnehmer aus die Erreichbarkeit des anderen Netzwerkteilnehmers zu überprüfen, können oben beschriebene Probleme nicht vollständig ausgeschlossen werden.

Beispielsweise kann per Ping die Adresse eines ersten Adressbereichs überprüft und für korrekt befunden werden. Werden jedoch die lokalen Richtlinien nicht berücksichtigt, ist das Ergebnis der Überprüfung unvollständig, was gegebenenfalls zu Problemen im Kommunikationsablauf führen kann.

Es ist Aufgabe der vorliegenden Erfindung, ein Verfahren zur Diagnose der Erreichbarkeit von Netzwerkteilnehmern in einem IP-basierten Netzwerk, insbesondere einem IPv6-basierten Netzwerk, sowie einen Netzwerkteilnehmer und ein entsprechendes Netzwerk anzugeben, bei denen die oben beschriebene Problematik verhindert oder zumindest verringert werden kann.

Diese Aufgaben werden gelöst durch ein Verfahren gemäß den Merkmalen des Patentanspruches 1, einen Netzwerkteilnehmer gemäß den Merkmalen des Patentanspruches 18 sowie ein Netzwerk gemäß den Merkmalen des Patentanspruches 19. Vorteilhafte Ausgestaltungen ergeben sich aus den abhängigen Patentansprüchen.

Gemäß einem ersten Aspekt der vorliegenden Erfindung wird ein Verfahren zur Diagnose der Erreichbarkeit von Netzwerkteilnehmern in einem IP-basierten Netzwerk, insbesondere einem IPv6-basierten Netzwerk vorgeschlagen, in dem jedem der Netzwerkteilnehmer in einem oder mehreren Adressbereichen zumindest eine jeweilige Adresse zuweisbar ist, unter der der betreffende Netzwerkteilnehmer für einen anderen Netzwerkteilnehmer erreichbar ist.

Das Netzwerk umfasst einen ersten Netzwerkteilnehmer, dem in zumindest einem der Adressbereiche eine jeweilige erste Adresse zugewiesen ist, wobei durch eine in dem ersten Netzwerkteilnehmer gespeicherte erste Richtlinie festgelegt ist, welche der zugewiesenen ersten Adressen für eine Kommunikation mit den anderen Netzwerkteilnehmern zu verwenden ist. Das Netzwerk umfasst weiter einen zweiten Netzwerkteilnehmer, dem in zumindest einem der Adressbereiche eine jeweilige zweite Adresse zugewiesen ist, wobei durch eine in dem zweiten Netzwerkteilnehmer gespeicherte zweite Richtlinie festgelegt ist, welche der zugewiesenen zweiten Adressen für eine Kommunikation mit den anderen Netzwerkteilnehmern zu verwenden ist. Bei dem ersten und dem zweiten Netzwerkteilnehmern handelt es sich insbesondere um Automatisierungskomponenten, wie z.B. Feldgeräte. Die erste und die zweite Richtlinie stellen lokale Richtlinien der ersten und zweiten Netzwerkteilnehmer dar. Diese sind auch unter der Bezeichnung Address Selection Policy, ASP bekannt.

Zur Überprüfung der Erreichbarkeit des zweiten Netzwerkteilnehmers durch den ersten Netzwerkteilnehmer werden folgende Schritte durchgeführt:
a) durch den ersten Netzwerkteilnehmer wird ein Name des zweiten Netzwerkteilnehmers aufgelöst, wobei als Ergebnis der Namensauflösung zumindest die dem zweiten Netzwerkteilnehmer zugewiesenen Adressen des oder der Adressbereiche erhalten werden;
b) aus den in Schritt a) erhaltenen Adressen wird eine Adressliste erzeugt;
c) für jede der in der Adressliste enthaltenen Adressen wird eine getrennte Prüfung der Kommunikationsfähigkeit zwischen dem ersten Netzwerkteilnehmer und dem zweiten Netzwerkteilnehmer durchgeführt;
d) das Ergebnis der Prüfung wird ausgewertet und bereitgestellt.

Durch das erfindungsgemäße Verfahren wird damit nicht mehr nur ein einziger Adressbereich (auch als Adress-Ebene bekannt) auf Erreichbarkeit eines Netzwerkteilnehmers geprüft, sondern alle sinnhaften Adressbereiche. Hierdurch ist bei einer Prüfung der Erreichbarkeit von Netzwerkteilnehmern eines IP-basierten Netzwerks kein Wissen über die Mechanismen des Netzwerks notwendig. Dadurch wird die Fehlersuche in IP-basierten Netzwerken, insbesondere IPv6-basierten Netzwerken, für einen Administrator vereinfacht. Insbesondere werden Administratoren von IT-Spezialkenntnissen entlastet.

Ein weiterer Vorteil des Verfahrens besteht darin, dass eine Fehleranalyse sowie die Diagnose von Fehlern genauer und schneller erfolgen kann. Insbesondere können falsche, negative Diagnosen vermieden werden.

Erzielt werden diese Vorteile durch die automatische Überprüfung von allen in Frage kommenden Adressbereichen und deren Adressen, ohne dass dies einzeln durch einen Anwender erfolgen muss.

Durch das Verfahren lässt sich die Diagnose der Erreichbarkeit von Netzwerkteilnehmern in die Netzwerkteilnehmer selbst verlagern. Hierdurch wird sichergestellt, dass die Überprüfung der Adressen auf der gleichen lokalen Gerätekonfiguration basiert, auf der später auch Verbindungsaufbauten zwischen verteilten Applikationen, welche auf den Netzwerkteilnehmern ablaufen, erfolgen.

Ein weiterer Vorteil besteht darin, dass in der Automatisierungstechnik die Akzeptanz von IPv6-basierten Netzwerken gegenüber IPv4-basierten Netzwerken durch die verbesserte Diagnose erhöht wird.

Die Überprüfung der Erreichbarkeit des zweiten Netzwerkteilnehmers wird durch eine Diagnoseapplikation durchgeführt, die auf dem ersten Netzwerkteilnehmer ausgeführt wird. Die Diagnoseapplikation kann als Software oder Hardware bereitgestellt werden. Die Diagnoseapplikation tauscht zur Durchführung des Verfahrens direkt oder über einen Webserver mit einem IP-Stack des ersten Netzwerkteilnehmers Nachrichten aus bzw. ist dazu ausgebildet Nachrichten mit diesem auszutauschen. Im ersten Fall ist die Diagnoseapplikation dazu ausgebildet, die Diagnose der Erreichbarkeit von Netzwerkteilnehmern autark auszuführen. In der zweiten Variante, in der die Diagnoseapplikation über einen Webserver mit einem IP-Stack Nachrichten austauscht, kann eine Steuerung bzw. Kontrolle der Diagnoseapplikation über einen an das Netzwerk angeschlossen oder mit diesem kommunikativ verbundenen Diagnoserechner erfolgen. Auch ein Zugriff über eine Mensch-Maschine-Schnittstelle des ersten Netzwerkteilnehmers ist möglich.

In einer weiteren Ausgestaltung erfolgt die Auflösung des Namens des zweiten Netzwerkteilnehmers durch ein Mittel zur Namensauflösung, das DNS (Domain Name System) und/oder mDNS (multicast Domain Name System) und/oder Profinet DCP (Profinet Dynamic Configuration Protocol) aufführt, erfolgen. Die Auflösung des Namens des zweiten Netzwerkteilnehmers erfolgt in Schritt a) des oben beschriebenen Verfahrens.

Die Adressliste wird derart erzeugt, dass diese zu den erhaltenen Adressen des zweiten Netzwerkteilnehmers jeweils zugehörige Quell-Adressen des ersten Netzwerkteilnehmers umfasst. Die geeignete Zuordnung von Quell-Adressen erfolgt z.B. gemäß RFC 6724 oder RFC 3484.

Die Adressliste wird zweckmäßigerweise mit einer gewichteten Sortierung erzeugt, so dass die erhaltenen Adressen entsprechend ihrer Erreichbarkeit auf- oder absteigend sortiert sind. Die Adresssortierung kann beispielsweise gemäße RFC 6724 ausgeführt werden. Als Ergebnis des Prozesses der Adresssortierung liegt dann eine gewichtete Liste von Ziel-Netzwerkeilnehmer-Adressen (d.h. den erhaltenen Adressen) mit zugehörigen Quell-Netzwerkteilnehmer-Adressen vor. Es ist dabei zweckmäßig, wenn die Sortierung der Adressliste durch Verarbeitung der in dem ersten Netzwerkteilnehmer gespeicherten Richtlinie festgelegt wird.

Die in den jeweiligen Netzwerkteilnehmern gespeicherten Richtlinien werden durch die Diagnoseapplikation und/oder andere Applikationen, z.B. über eine lokale Programmschnittstelle, ausgelesen, nachdem die Richtlinie vorab in die Netzwerkteilnehmer, z.B. durch einen RFC-konformen Mechanismus wie DHCPv6, übertragen wurde.

Die Prüfung der Kommunikationsfähigkeit zwischen dem ersten Netzwerkteilnehmer und dem zweiten Netzwerkteilnehmer erfolgt durch ein Diagnose-Werkzeug, durch das parallel oder sequentiell an jede erhaltene Adresse des zweiten Netzwerkteilnehmers ein Ping ausgesendet wird. Das Diagnose-Werkzeug kann hierzu eine oder mehrere Ping-Einheiten umfassen, welche die Prüfung der Kommunikationsfähigkeit für jede Adresse jedes Adressbereichs getrennt ausführt.

Bei einem sequentiellen Aussenden der Pings erfolgt das Senden an die erhaltenen Adressen vorzugsweise in der Reihenfolge ihrer gewichteten Sortierung. Alternativ kann bei einem sequentiellen Aussenden der Pings das Aussenden an die erhaltenen Adressen abweichend von der Reihenfolge ihrer gewichteten Sortierung erfolgen. Dies kann beispielsweise für eine schnellere Kontrolle bzw. Diagnose der Erreichbarkeit notwendig sein. Ein solcher Fall liegt beispielweise dann vor, wenn gleichgewichtete Adressen eines oder unterschiedlicher Adressbereiche vorliegen.

Soll ein paralleles Aussenden von Pings an jede erhaltene Adresse des zweiten Netzwerkteilnehmers erfolgen, muss eine entsprechende Anzahl an Ping-Einheiten in dem Diagnose-Werkzeug vorgesehen sein. Die Ping-Einheiten können als Softwarekomponenten ausgebildet sein und zur Aussendung von ICMP-Echo-Nachrichten ausgebildet sein.

Die Prüfung der Kommunikationsfähigkeit zwischen dem ersten Netzwerkteilnehmer und dem zweiten Netzwerkteilnehmer kann gemäß einer weiteren Ausgestaltung unter Steuerung einer Recheneinheit erfolgen, welche das Diagnose-Werkzeug steuert. Die Aufgabe der Recheneinheit besteht darin, den parallelen oder sequentiellen Prozess des Aussendens der Pings zu steuern. Die Steuerung des Diagnose-Werkzeugs kann insbesondere unter Berücksichtigung von Lastbegrenzungsregeln erfolgen. Zum Beispiel kann die maximale Anzahl paralleler Pings pro Test auf beispielsweise 10 begrenzt werden. Es können z.B. nie mehr als 10 Adressen gleichzeitig angesprochen werden. Sind mehr als 10 Adressen zu testen, so werden die verbleibenden Adressen in Blöcken ä 10 abgearbeitet. Außerdem kann man noch das Absenden der parallelen Pings spreizen. Dann werden die 10 Prüf-Pings eines Blocks nicht "exakt" gleichzeitig verschickt, sondern beispielsweise jeweils um 10ms versetzt, um so kurze Bursts zu vermeiden.

Für jeden Adressbereich kann nur eine der erhaltenen Adressen des zweiten Netzwerkteilnehmers geprüft werden. Dies ist in dem vorher beschriebenen Fall sinnvoll, wenn gleich gewichtete Adressen für einen Adressbereich vorliegen.

Gemäß einer weiteren Ausgestaltung wird eine geprüfte Adresse als nicht erreichbar gekennzeichnet, wenn zu dieser keine zugehörige Quell-Adresse des ersten Netzwerkteilnehmers existiert. Quelladressen sind in diesem Zusammenhang definitionsgemäß diejenigen IP-Adressen, die den IP-Schnittstellen desjenigen Netzwerkteilnehmers zugeordnet (an diese "gebunden") sind, der ein IP-Paket versenden will. Quelladressen können dabei über verschiedene Wege erzeugt und an IP-Schnittstellen gebunden werden: beispielsweise per SLAAC, DHCP, per manueller Konfiguration.

Das Ergebnis der Prüfung kann gemäß einer weiteren Ausgestaltung in einem Ergebnisspeicher gespeichert werden, der durch die Diagnoseapplikation nach Durchführung der Prüfung ausgelesen wird und das Ergebnis der Prüfung, insbesondere in Form einer Liste, bereitstellt. Die Bereitstellung kann beispielsweise in visueller, durch einen Administrator, auslesbaren Form erfolgen. Dabei können mehrere geprüfte Adressen, die einer gleichen Adress-Ebene zugeordnet sind, in dem Ergebnis, insbesondere der Liste, zusammengefasst werden.

Gemäß einem zweiten Aspekt der vorliegenden Erfindung wird ein Netzwerkteilnehmer für ein IP-basiertes Netzwerk, insbesondere ein IPv6-basiertes Netzwerk, vorgeschlagen, in dem jedem der Netzwerkteilnehmer in einem oder mehreren Adressbereichen zumindest eine jeweilige Adresse zuweisbar ist, unter der der betreffende Netzwerkteilnehmer für einen anderen Netzwerkteilnehmer erreichbar ist. Das Netzwerk umfasst den ersten Netzwerkteilnehmer, dem in zumindest einem der Adressbereiche eine jeweilige erste Adresse zugewiesen ist, wobei durch eine in dem ersten Netzwerkteilnehmer gespeicherte erste Richtlinie festgelegt ist, welche der zugewiesenen ersten Adressen für eine Kommunikation mit den anderen Netzwerkteilnehmern zu verwenden ist. Das Netzwerk umfasst weiter einen zweiten Netzwerkteilnehmer, dem in zumindest einem der Adressbereiche eine jeweilige zweite Adresse zugewiesen ist, wobei durch eine in dem zweiten Netzwerkteilnehmer gespeicherte zweite Richtlinie festgelegt ist, welche der zugewiesenen zweiten Adressen für eine Kommunikation mit den anderen Netzwerkteilnehmern zu verwenden ist. Der als erste Netzwerkteilnehmer fungierende Netzwerkteilnehmer umfasst:
a) ein erstes Mittel, durch das ein Name des zweiten Netzwerkteilnehmers auflösbar ist, wobei als Ergebnis der Namensauflösung zumindest die dem zweiten Netzwerkteilnehmer zugewiesenen Adressen des oder der Adressbereiche erhalten werden;
b) ein zweites Mittel, durch das aus den in Schritt a) erhaltenen Adressen eine Adressliste erzeugbar ist;
c) ein drittes Mittel, durch das für jede der in der Adressliste enthaltenen Adressen eine getrennte Prüfung der Kommunikationsfähigkeit zwischen dem ersten Netzwerkteilnehmer und dem zweiten Netzwerkteilnehmer durchführbar ist; und
d) ein viertes Mittel, durch das das Ergebnis der Prüfung auswert- und bereitstellbar ist.

Ein erfindungsgemäßer Netzwerkteilnehmer weist die gleichen Vorteile auf, wie diese vorstehend in Verbindung mit dem erfindungsgemäßen Verfahren beschrieben wurden. Insbesondere kann der Netzwerkteilnehmer weitere Mittel zur Durchführung der oben beschriebenen optionalen Verfahrensschritte aufweisen.

Gemäß einem dritten Aspekt der vorliegenden Erfindung wird ein IP-basiertes Netzwerk, insbesondere ein IPv6-basiertes Netzwerk, mit mehreren Netzwerkteilnehmern vorgeschlagen, in dem jedem der Netzwerkteilnehmer in einem oder mehreren Adressbereichen zumindest eine jeweilige Adresse zuweisbar ist, unter der der betreffende Netzteilnehmer für einen anderen Netzwerkteilnehmer erreichbar ist. Das Netzwerk umfasst einen ersten Netzwerkteilnehmer, dem in zumindest einem der Adressbereiche eine jeweilige erste Adresse zugewiesen ist, wobei durch eine in dem ersten Netzwerkteilnehmer gespeicherte erste Richtlinie festgelegt ist, welche der zugewiesenen ersten Adressen für eine Kommunikation mit den anderen Netzwerkteilnehmern zu verwenden ist. Das Netzwerk umfasst weiter einen zweiten Netzwerkteilnehmer, dem in zumindest einem der Adressbereiche eine jeweilige zweite Adresse zugewiesen ist, wobei durch eine in dem zweiten Netzwerkteilnehmer gespeicherte zweite Richtlinie festgelegt ist, welche der zugewiesenen zweiten Adressen für eine Kommunikation mit den anderen Netzwerkteilnehmern zu verwenden ist. Der erste Netzwerkteilnehmer ist erfindungsgemäß in der vorstehend beschriebenen Weise ausgebildet.

Die Erfindung wird nachfolgend näher anhand eines Ausführungsbeispiels in der Zeichnung erläutert.

Es zeigen:
- Fig. 1: eine schematische Darstellung eines IP-basierten industriellen Automatisierungsnetzwerks mit zwei Netzwerkteilnehmern und einem Diagnoserechner,
- Fig. 2: eine schematische Darstellung eines erfindungsgemäß ausgebildeten Netzwerkteilnehmers,
- Fig. 3: eine schematische Darstellung eines alternativ ausgebildeten Teils eines erfindungsgemäßen Netzwerkteilnehmers, und
- Fig. 4: ein Flussdiagramm, das den schematischen Ablauf des erfindungsgemäßen Verfahrens illustriert.

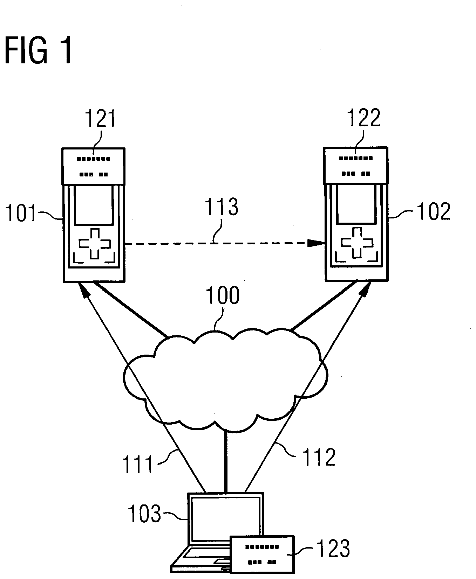

Figur 1 zeigt eine schematische Darstellung eines IP-basierten Netzwerks 100, an das beispielhaft zwei Netzwerkteilnehmer 101, 102 in Gestalt von Automatisierungskomponenten (z.B. Feldgeräte) und ein Netzwerkteilnehmer 103 in Gestalt eines Diagnoserechners angeschlossen sind. Bei dem Netzwerk 100 handelt es sich exemplarisch um ein IPv6-basiertes Netzwerk 100. Dies erlaubt es, jedem der Netzwerkteilnehmer 101, 102, 103 in mehreren Adressbereichen (sogenannten Adress-Ebenen) eine oder mehrere Adressen zuzuweisen. Als Adressbereiche können beispielsweise gleichzeitig genutzt werden: LLA, ULA und GUA. Darüber hinaus können weitere Adressbereiche zumindest temporär genutzt werden. Dies ermöglicht es beispielsweise externen Netzwerkteilnehmern einen zeitweiligen Zugang zu einer eingeschränkten Menge von Netzwerkteilnehmern zu erlauben.

Damit der Netzwerkteilnehmer 101 (nachstehend auch als erster Netzwerkteilnehmer 101 bezeichnet) mit dem Netzwerkteilnehmer 102 (nachstehend auch als zweiter Netzwerkteilnehmer 102 bezeichnet) kommunizieren kann, muss der erste Netzwerkteilnehmer 101 eine Auswahl zwischen den zur Verfügung stehenden Adressen auf Seiten des ersten Netzwerkteilnehmers 101 und des zweiten Netzwerkteilnehmers 102 treffen. Diese Wahl wird durch auf den Netzwerkteilnehmern 101, 102, 103 lokal gespeicherten Richtlinien 121 (auch als erste Richtlinie bezeichnet), 122 (auch als zweite Richtlinie bezeichnet), 123 (auch als dritte Richtlinie bezeichnet) beeinflusst. Die erste, die zweite und die dritte Richtlinie 121, 122, 123 werden auch als Address Selection Policy, ASP bezeichnet. Die Richtlinien 121, 122, 123 sind idealerweise innerhalb des Netzwerks 100 gleichartig. Aufgrund von Konfigurationsfehlern oder lokalen Erfordernissen können sich die Richtlinien 121, 122, 123 voneinander unterscheiden.

Figur 1 zeigt das Netzwerk in einer Darstellung, in der eine herkömmlich genutzte Überprüfung der Erreichbarkeit der Netzwerkteilnehmer 101 und 102 mit Hilfe des Netzwerkteilnehmers 103 erfolgt. Die grundsätzliche Erreichbarkeit der Netzwerkteilnehmer 101, 102 wird mit einem Diagnosewerkzeug in Gestalt eines Ping-Programms überprüft, das in dem in Figur 1 dargestellten Netzwerk auf dem dritten Netzwerkteilnehmer 103, d.h. dem Diagnoserechner, installiert ist und abläuft. Hierzu wird eine ICMP Echo-Nachricht 111 (d.h. ein Ping) an den ersten Netzwerkteilnehmer 101 und eine entsprechende ICMP Echo-Nachricht 112 (d.h. ein Ping) an den zweiten Netzwerkteilnehmer 102 übermittelt und ausgewertet. Wird jeweils eine Antwort auf den Ping empfangen, so wird auf eine mögliche Kommunikationsfähigkeit zwischen dem ersten Netzwerkteilnehmer 101 und dem zweiten Netzwerkteilnehmer 102 geschlossen.

Dieser Rückschluss ist jedoch nur zulässig, wenn das Netzwerk keinen Einsatz von Adressbereichen gestattet.

Bei IPv6-Netzwerken ist dieser Schluss jedoch in der Regel nicht möglich. Grund hierfür ist, dass der erste Netzwerkteilnehmer 101, um mit dem zweiten Netzwerkteilnehmer 102 zu kommunizieren eine Auswahl zwischen den zur Verfügung stehenden Adressen bzw. Adressbereichen des ersten und des zweiten Netzwerkteilnehmers 101, 102 treffen muss, welche durch die bereits erwähnten ersten und zweiten Richtlinien 121, 122 beeinflusst wird. Bei der wie oben beschriebenen einzelnen Überprüfung der Erreichbarkeit des ersten Netzwerkteilnehmers 101 und des zweiten Netzwerkteilnehmers 102 durch einen davon getrennten Diagnoserechner kann die Erreichbarkeit durch den Diagnoserechner 103 gegeben sein, weil beispielsweise der Ping zum ersten Netzwerkteilnehmer 101 zu einer Adresse im Adressbereich GUA erfolgreich ist. In entsprechender Weise kann beispielsweise auch ein Ping zu dem zweiten Netzwerkteilnehmer 102 zu einer Adresse in dem Adressbereich GUA erfolgreich sein. Die erste und die zweite Richtlinie schreiben jedoch z.B. vor, dass eine Kommunikation zwischen dem ersten und dem zweiten Netzwerkteilnehmer 101, 102 über eine Adresse im Adressbereich ULA zu erfolgen hat. Der Diagnoserechner 103 konnte damit zwar die Erreichbarkeit des ersten und des zweiten Netzwerkteilnehmers feststellen, eine Kommunikation zwischen den beiden Netzwerkteilnehmern 101, 102 ist dennoch aufgrund der nicht Berücksichtigung des Inhalts der ersten und der zweiten Richtlinien 121, 122 nicht möglich, da nicht der tatsächliche Kommunikationspfad zwischen dem ersten und dem zweiten Netzwerkteilnehmer 101, 102 überprüft wurde.

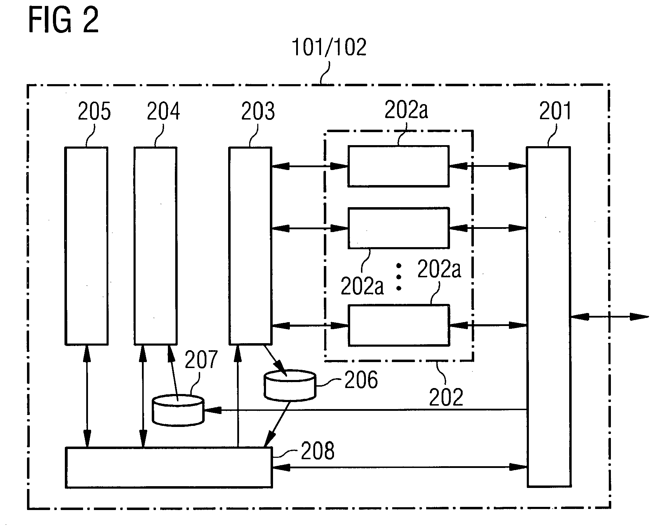

Das nachgehend unter Bezugnahme auf die Figuren 2 bis 4 beschriebene Vorgehen vermeidet eine derartige Unsicherheit bei der Diagnose der Erreichbarkeit von Netzwerkteilnehmern in einem IPv6-basierten Netzwerk. Das Vorgehen beruht darauf, dass nicht mehr nur eine einzige Adresse, sondern alle Adressen der in dem Netzwerk verwendeten Adressbereiche überprüft werden. Dadurch wird kein Wissen über die Mechanismen von IPv6 vorausgesetzt. Die Fehlersuche in IPv6-Netzwerken kann dadurch reduziert werden bzw. sogar überflüssig gemacht werden. Die Überprüfung aller in Frage kommenden Adressen der Adressbereiche erfolgt, ohne dass dies durch einen Anwender manuell oder einzeln durchgeführt werden muss. Dadurch ist das vorgeschlagene Vorgehen zeiteffizient.

Ermöglicht wird dies durch eine Verlagerung der Diagnose in die Netzwerkteilnehmer selbst. Hierdurch kann sichergestellt werden, dass eine Überprüfung der Adresse(n) der unterschiedlichen Adressbereiche auf jeweiligen lokalen Konfigurationen basiert, über die später auch Verbindungsaufbauten zwischen verteilten Applikationen der Netzwerkteilnehmer erfolgen. Dies ist in Fig. 1 symbolisch durch den mit 113 gekennzeichnetem Pfad zwischen dem ersten und dem zweiten Netzwerkteilnehmer 101, 102 gekennzeichnet.

Figur 2 zeigt einen zu diesem Zweck ausgebildeten Netzwerkteilnehmer. Bei diesem in Figur 2 gezeigten Netzwerkteilnehmer kann es sich um den ersten und/oder den zweiten Netzwerkteilnehmer 101, 102 handeln. Der Netzwerkteilnehmer 101, 102 umfasst einen IP-Stack 201, über den der Netzwerkteilnehmer 101, 102 an das in Figur 1 gezeigte Netzwerk 100 angebunden ist. Ferner umfasst der Netzwerkteilnehmer 101, 202 ein Diagnosewerkzeug 202, eine Recheneinheit 203 zur Steuerung des Diagnose-Werkzeugs 202, ein Mittel 204 zur Erstellung einer Adressliste, ein Mittel 205 zur Namensauflösung, einen Ergebnisspeicher 206, einen Speicher 207 für die ersten bzw. zweite Richtlinie 121, 122 sowie eine Diagnoseapplikation 208. Der zwischen den einzelnen Komponenten des Netzwerkteilnehmers 101, 102 stattfindende Kommunikationsfluss ist durch entsprechende Pfeile gekennzeichnet, wobei ein Doppelpfeil eine bidirektionale Kommunikation und ein einfacher Pfeil eine unidirektionale Kommunikation in Richtung der Pfeilspitze symbolisiert.

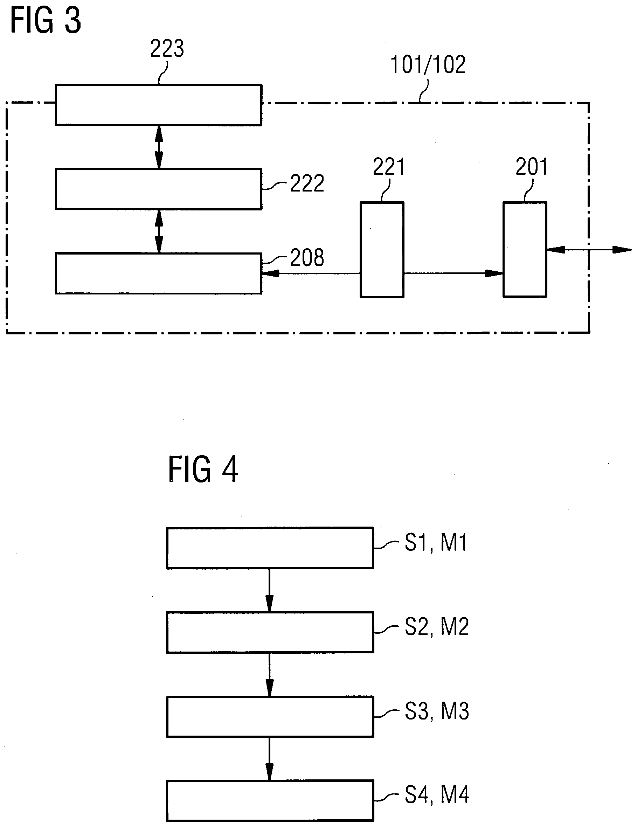

Die Diagnoseapplikation 208 kann, wie dies in Figur 2 dargestellt ist, direkt mit dem IP-Stack 201 verbunden sein, so dass das nachfolgend beschriebene Vorgehen von einem Anwender über einen separaten Diagnoserechner, der als Netzwerkteilnehmer an das Netzwerk 100 angeschlossen ist, gesteuert bzw. überwacht werden kann. Alternativ kann die Diagnoseapplikation 208 auch, wie dies schematisch in Figur 3 dargestellt ist, über einen Webserver 201 mit dem IP-Stack 201 verbunden sein. In diesem Fall kann die Steuerung bzw. Überwachung des Vorgehens der Diagnoseapplikation 208 über einen entfernten Diagnoserechner, der über das Internet mit dem Netzwerk verbunden ist, erfolgen. Beim Vorhandensein eines Displays 223 und einer Display-Applikation 222 (Fig. 3) kann die Überwachung und Steuerung direkt an dem Netzwerkteilnehmer 101, 102 erfolgen. Die Diagnoseapplikation 208 steht darüber hinaus zum Austausch von Daten mit der Recheneinheit 203, dem Mittel 204 zur Erstellung der Adressliste und dem Mittel 205 zur Namensauflösung in Verbindung.

Der Ergebnisspeicher 206 kann durch die Diagnoseapplikation 208 ausgelesen werden. Ein Beschreiben des Ergebnisspeichers 206 erfolgt durch die Recheneinheit 203.

Ein Beschreiben des Speichers 207 mit der ersten bzw. mit der zweiten Richtlinie 121, 122 erfolgt über den IP-Stack 201. Die erste bzw. zweite Richtlinie 121, 122 kann dabei entweder lokal konfiguriert oder über RFC-konforme Mechanismen, wie DHCPv6, in den Speicher 207 eingeschrieben werden.

Das Mittel 204 zur Erstellung der Adressliste ist dazu eingerichtet, die in dem Speicher 207 gespeicherte erste bzw. zweite Richtlinie 121, 122 auszulesen und zu verarbeiten.

Die Recheneinheit 203 dient zur Steuerung des Diagnose-Werkzeugs 202, welche ein oder mehrere Ping-Einheiten 202a aufweist. Beim Vorhandensein mehrerer Ping-Einheiten 202a wird jede der Ping-Einheiten 202a unmittelbar durch die Recheneinheit 203 angesteuert. In entsprechender Weise kommuniziert jede der Ping-Einheiten 202a mit dem IP-Stack 201.

Soll nun die Kommunikation zwischen dem ersten und dem zweiten Netzwerkteilnehmer 101, 102 überprüft werden, so erfolgt ein Zugriff auf die Diagnoseapplikation 208, z.B. des ersten Netzwerkteilnehmers 101. Der Zugriff auf die Diagnoseapplikation 208 erfolgt wahlweise über den IP-Stack 201 von einem an das Netzwerk 100 angeschlossenen Diagnoserechner 103 oder alternativ über den Webserver 221 oder alternativ, beim Vorhandensein einer entsprechenden Mensch-Maschine-Schnittstelle (umfassend die Anzeige 223 und die Anzeige-Applikation 222), direkt am ersten Netzwerkteilnehmer 101.

In einem ersten Schritt S1 (vgl. Figur 4) initiiert die Diagnoseapplikation 208 das Auflösen des symbolischen Gerätenamens des zweiten Netzwerkteilnehmers 102 mittels des an sich bekannten Mittels 205 zur Namensauflösung. Das Mittel 205 zur Namensauflösung stellt einen Name Resolver dar. Hierzu können beispielsweise DNS, mDNS oder Profinet DCP als technische Mechanismen zum Einsatz kommen. Als Ergebnis der Namensauflösung werden die dem zweiten Netzwerkteilnehmer 102 zugewiesenen Adressen des oder der Adressbereiche von dem Mittel 205 an die Diagnoseapplikation 208 übertragen.

In einem zweiten Schritt S2 werden die erhaltenen Adressen durch die Diagnoseapplikation 208 an das Mittel 204 zur Erstellung einer Adressliste übertragen und eine Adressliste erzeugt. Das Mittel 204 führt eine Adresssortierung aus. Die Adresssortierung kann gemäß RFC 6724 erfolgen. Dabei nimmt das Mittel 204 eine Gewichtung der erhaltenen Adressen des zweiten Netzwerkteilnehmers 102 und den jeweils zugehörigen Quell-Adressen des ersten Netzwerkteilnehmers 101 vor. Die Gewichtung, welche in der sortierten Adressliste resultiert, erfolgt beispielsweise entsprechend der Wahrscheinlichkeit der Erreichbarkeit des zweiten Netzwerkteilnehmers 102. In dem durch das Mittel 204 vorgenommenen Prozess der Erzeugung der Adressliste fließt die in dem Speicher 207 enthaltene erste Richtlinie 121 ein. Hierzu greift das Mittel 204 auf den Speicher 207 zu.

In einem dritten Schritt S3 steuert die Diagnoseapplikation 208 nun mit der von dem Mittel 204 erhaltenen Adressliste der Adresse(n) des zweiten Netzwerkteilnehmers die Recheneinheit 203. Die Recheneinheit 203 führt unter Berücksichtigung eventueller Lastbegrenzungsregeln mit Hilfe der Ping-Einheiten 202a des Diagnose-Werkzeugs 202 die Prüfung der Kommunikationsfähigkeit für jede der Adresse(n) der Adressbereiche getrennt aus. Die Recheneinheit 203 ist dabei dafür zuständig, die Adressliste der erhaltenen Adressen abzuarbeiten. Unter Umständen kann durch die Recheneinheit eine Abweichung von der gewichteten Reihenfolge der Adressliste erfolgen, wenn dies im Sinne einer schnelleren Kontrolle der Diagnose der Erreichbarkeit sinnvoll ist. Dies ist beispielsweise dann der Fall, wenn gleich gewichtete Adressen eines oder unterschiedlicher Adressbereichs vorliegen. In diesem Fall ist es ausreichend, die Erreichbarkeit nur jeweils einer Adresse eines jeweiligen Adressbereichs zu überprüfen.

Durch die oben beschriebene Gewichtung kann es dazu kommen, dass eine Adresse des zweiten Netzwerkteilnehmers 102 als nicht erreichbar erkannt wird, wenn keine geeignete, zugeordnete Adresse des ersten Netzwerkteilnehmers 101 dazu existiert. Für diese Fälle kann direkt auf eine Nicht-Erreichbarkeit geschlossen werden. Eine Prüfung durch eine Ping-Einheit 202a entfällt dann.

Die Ping-Einheiten 202a nutzen das bekannte und RFC-genormte Ping-Protokoll, das als ICMPv6 Echo bekannt ist. Dadurch wird die Erreichbarkeit einer bestimmten Adresse eines Adressbereichs kontrolliert.

Die Ergebnisse der Erreichbarkeitsprüfungen werden in einem Schritt S4 schließlich in dem Speicher 206 abgespeichert, wo sie von der Diagnoseanwendung 208 ausgelesen und aufbereitet werden. Das Ergebnis kann dann über die Display-Applikation 222 oder den Webserver 221 zur Kontrolle eines Nutzers visualisiert werden. Dabei ist es möglich, Adressen aus gleichartigen Bereichen zur Verbesserung der Verständlichkeit zusammenzufassen.

Figur 4 visualisiert den Verfahrensablauf der oben beschriebenen Weise. Schritt S1 wird durch ein erstes Mittel M1 durchgeführt, welches die Diagnoseapplikation und das Mittel 205 zur Namensauflösung umfasst. Schritt S2 wird durch ein zweites Mittel M2 ausgeführt, welches die Diagnoseapplikation 208 und das Mittel 204 umfasst. Schritt S3 wird auch durch ein drittes Mittel M3 ausgeführt, welches das Diagnose-Werkzeug 202 und die Recheneinheit 203 umfasst. Schritt S4 wird durch ein viertes Mittel M4 ausgeführt, welches die Recheneinheit 203 und die Diagnoseapplikation 208 umfasst.

## Patentansprüche

1. Verfahren zur Diagnose der Erreichbarkeit von Netzwerkteilnehmern (101, 102) in einem IP-basierten Netzwerk (100), in dem jedem der Netzwerkteilnehmer (101, 102) in einem oder mehreren Adressbereichen (GUA, ULA, LLA) zumindest eine jeweilige Adresse zuweisbar ist, unter der der betreffende Netzwerkteilnehmer (101, 102) für einen anderen Netzwerkteilnehmer (101, 102, 103) erreichbar ist, wobei das Netzwerk (100) umfasst:
- einen ersten Netzwerkteilnehmer (101), dem in zumindest einem der Adressbereiche (GUA, ULA, LLA) zumindest eine jeweilige erste Adresse zugewiesen ist, wobei durch eine in dem ersten Netzwerkteilnehmer (101) gespeicherte erste Richtlinie (121) festgelegt ist, welche der zugewiesenen ersten Adressen für eine Kommunikation mit den anderen Netzwerkteilnehmern (101, 102, 103) zu verwenden ist;
- einen zweiten Netzwerkteilnehmer (102), dem in zumindest einem der Adressbereiche (GUA, GUA, LLA) zumindest eine jeweilige zweite Adresse zugewiesen ist, wobei durch eine in dem zweiten Netzwerkteilnehmer (102) gespeicherte zweite Richtlinie (122) festgelegt ist, welche der zugewiesenen zweiten Adressen für eine Kommunikation mit den anderen Netzwerkteilnehmern (101, 102, 103) zu verwenden ist;
bei dem zur Überprüfung der Erreichbarkeit des zweiten Netzwerkteilnehmers (102) durch den ersten Netzwerkteilnehmer (101) folgende Schritte durchgeführt werden:
a) durch den ersten Netzwerkteilnehmer (101) wird ein Name des zweiten Netzwerkteilnehmers (102) aufgelöst, wobei als Ergebnis der Namensauflösung die dem zweiten Netzwerkteilnehmer (102) zugewiesenen Adressen des oder der Adressbereiche (GUA, ULA, LLA) erhalten werden;
b) aus den in Schritt a) erhaltenen Adressen wird eine Adressliste mit einer gewichteten, Adresssortierung erzeugt, so dass die erhaltenen Adressen entsprechend ihrer Erreichbarkeit auf- oder absteigend sortiert sind;
c) für jede der in der Adressliste enthaltenen Adressen wird eine getrennte Prüfung der Kommunikationsfähigkeit zwischen dem ersten Netzwerkteilnehmer (101) und dem zweiten Netzwerkteilnehmer (102) durchgeführt, wobei
- die Prüfung der Kommunikationsfähigkeit zwischen dem ersten Netzwerkteilnehmer (101) und dem zweiten Netzwerkteilnehmer (102) durch ein Diagnose-Werkzeug (202) erfolgt, durch das sequentiell an jede erhaltene Adresse des zweiten Netzwerkteilnehmers (102) ein Ping ausgesendet wird,
- ein sequentielles Aussenden der Pings an die erhaltenen Adressen in der Reihenfolge ihrer gewichteten Sortierung erfolgt,
- anhand der gewichteten Adresssortierung nicht erreichbare Adressen des zweiten Netzwerkteilnehmers erkannt werden und eine Ping-Prüfung für diese nicht erreichbaren Adressen entfällt und
- die Prüfung der Kommunikationsfähigkeit zwischen dem ersten Netzwerkteilnehmer (101) und dem zweiten Netzwerkteilnehmer (102) unter Steuerung einer Recheneinheit (203) erfolgt, welche das Diagnose-Werkzeug (202) steuert;
d) das Ergebnis der Prüfung wird ausgewertet und bereitgestellt.

2. Verfahren nach Anspruch 1, bei dem bei sequentiellem Aussenden der Pings das Aussenden an die erhaltenen Adressen abweichend von der Reihenfolge ihrer gewichteten Sortierung erfolgt, wenn gleichgewichtete Adressen eines oder unterschiedlicher Adressbereiche vorliegen.

3. Verfahren nach einem der Ansprüche 1 oder 2, bei dem die Überprüfung der Erreichbarkeit durch eine Diagnoseapplikation (208) durchgeführt wird, die auf dem ersten Netzwerkteilnehmer (101) ausgeführt wird.

4. Verfahren nach Anspruch 3, bei dem die Diagnoseapplikation (208) zur Durchführung des Verfahrens direkt oder über einen Webserver (221) mit einem IP-Stack (201) Nachrichten austauscht.

5. Verfahren nach einem der vorhergehenden Ansprüche, bei dem die Auflösung des Namens des zweiten Netzwerkteilnehmers (102) durch ein Mittel zur Namensauflösung (205), das DNS und/oder mDNS und/oder Profinet DCP ausführt, erfolgt.

6. Verfahren nach einem der vorhergehenden Ansprüche, bei dem die Adressliste derart erzeugt wird, dass diese zu den erhaltenen Adressen des zweiten Netzwerkteilnehmers (102) jeweils zugehörige Quell-Adressen des ersten Netzwerkteilnehmers (101) umfasst.

7. Verfahren nach einem der vorhergehenden Ansprüche, bei dem die in den jeweiligen Netzwerkteilnehmern (101, 102) gespeicherten Richtlinien (121, 122; 207) durch die Diagnoseapplikation (208) ausgelesen werden.

8. Verfahren nach einem der vorhergehenden Ansprüche, bei dem für jeden Adressbereich nur eine der erhaltenen Adressen des zweiten Netzwerkteilnehmers (102) geprüft wird.

9. Verfahren nach einem der vorhergehenden Ansprüche, bei dem eine geprüfte Adresse als nicht erreichbar gekennzeichnet wird, wenn zu dieser keine zugehörige Quell-Adresse des ersten Netzwerkteilnehmers (101) existiert.

10. Verfahren nach einem der vorhergehenden Ansprüche, bei dem das Ergebnis der Prüfung in einem Ergebnisspeicher (206) gespeichert wird, der durch die Diagnoseapplikation (208) nach Durchführung der Prüfung ausgelesen wird und das Ergebnis der Prüfung, insbesondere in Form einer Liste, bereitgestellt wird.

11. Verfahren nach Anspruch 10, bei dem mehrere geprüfte Adressen, die einer gleichen Adressebene zugeordnet sind, in dem Ergebnis, insbesondere der Liste, zusammengefasst werden.

12. Netzwerkteilnehmer (101, 102) für ein IP-basiertes Netzwerk (100), in dem jedem der Netzwerkteilnehmer (101, 102) in einem oder mehreren Adressbereichen (GUA, ULA, LLA) zumindest eine jeweilige Adresse zuweisbar ist, unter der der betreffende Netzwerkteilnehmer (101, 102) für einen anderen Netzwerkteilnehmer (101, 102, 103) erreichbar ist, wobei das Netzwerk (100) umfasst:
- einen ersten Netzwerkteilnehmer (101), dem in zumindest einem der Adressbereiche (GUA, ULA, LLA) zumindest eine jeweilige erste Adresse zugewiesen ist, wobei durch eine in dem ersten Netzwerkteilnehmer (101) gespeicherte erste Richtlinie (121) festgelegt ist, welche der zugewiesenen ersten Adressen für eine Kommunikation mit den anderen Netzwerkteilnehmern (101, 102, 103) zu verwenden ist;
- einen zweiten Netzwerkteilnehmer (102), dem in zumindest einem der Adressbereiche (GUA, GUA, LLA) zumindest eine jeweilige zweite Adresse zugewiesen ist, wobei durch eine in dem zweiten Netzwerkteilnehmer (102) gespeicherte zweite Richtlinie (122) festgelegt ist, welche der zugewiesenen zweiten Adressen für eine Kommunikation mit den anderen Netzwerkteilnehmern (101, 102, 103) zu verwenden ist;
wobei der als erste Netzwerkteilnehmer (101) fungierende Netzwerkteilnehmer folgendes umfasst:
a) ein erstes Mittel (M1), durch das ein Name des zweiten Netzwerkteilnehmers (102) auflösbar ist, wobei als Ergebnis der Namensauflösung die dem zweiten Netzwerkteilnehmer (102) zugewiesenen Adressen des oder der Adressbereiche (GUA, ULA, LLA) erhalten werden;
b) ein zweites Mittel (M2), durch das aus den in Schritt a) erhaltenen Adressen eine Adressliste mit einer gewichteten Adresssortierung erzeugbar ist, so dass die erhaltenen Adresse entsprechend ihrer Erreichbarkeit auf- oder absteigend sortiert sind;
c) ein drittes Mittel (M3), durch das für jede der in der Adressliste enthaltenen Adressen eine getrennte Prüfung der Kommunikationsfähigkeit zwischen dem ersten Netzwerkteilnehmer (101) und dem zweiten Netzwerkteilnehmer (102) durchführbar ist, wobei
- die Prüfung der Kommunikationsfähigkeit zwischen dem ersten Netzwerkteilnehmer (101) und dem zweiten Netzwerkteilnehmer (102) durch ein Diagnose-Werkzeug (202) erfolgt, durch das sequentiell an jede erhaltene Adresse des zweiten Netzwerkteilnehmers (102) ein Ping ausgesendet wird,
- ein sequentielles Aussenden der Pings an die erhaltenen Adressen in der Reihenfolge ihrer gewichteten Sortierung erfolgt und
- die Prüfung der Kommunikationsfähigkeit zwischen dem ersten Netzwerkteilnehmer (101) und dem zweiten Netzwerkteilnehmer (102) unter Steuerung einer Recheneinheit (203) erfolgt, welche das Diagnose-Werkzeug (202) steuert;
d) ein viertes Mittel (M4), durch das das Ergebnis der Prüfung auswert- und bereitstellbar ist.

13. IP-basiertes Netzwerk mit mehreren Netzwerkteilnehmern (101, 120), in dem jedem der Netzwerkteilnehmer (101, 102) in einem oder mehreren Adressbereichen (GUA, ULA, LLA) zumindest eine jeweilige Adresse zuweisbar ist, unter der der betreffende Netzteilnehmer (101, 102) für einen anderen Netzwerkteilnehmer (101, 102, 103) erreichbar ist, wobei das Netzwerk (100) umfasst:
- einen ersten Netzwerkteilnehmer (101), dem in zumindest einem der Adressbereiche (GUA, ULA, LLA) eine jeweilige erste Adresse zugewiesen ist, wobei durch eine in dem ersten Netzwerkteilnehmer (101) gespeicherte erste Richtlinie (121) festgelegt ist, welche der zugewiesenen ersten Adressen für eine Kommunikation mit den anderen Netzwerkteilnehmern (101, 102, 103) zu verwenden ist;
- einen zweiten Netzwerkteilnehmer (102), dem in zumindest einem der Adressbereiche (GUA, GUA, LLA) eine jeweilige zweite Adresse zugewiesen ist, wobei durch eine in dem zweiten Netzwerkteilnehmer (102) gespeicherte zweite Richtlinie (122) festgelegt ist, welche der zugewiesenen zweiten Adressen für eine Kommunikation mit den anderen Netzwerkteilnehmern (101, 102, 103) zu verwenden ist;
wobei zumindest der erste Netzwerkteilnehmer (101) gemäß Anspruch 12 ausgebildet ist.

## Claims

1. Method for diagnosing the availability of network subscribers (101, 102) in an IP-based network (100), in which each of the network subscribers (101, 102) can be allocated, in one or more address ranges (GUA, ULA, LLA), at least one respective address at which the relevant network subscriber (101, 102) is available to another network subscriber (101, 102, 103), wherein the network (100) comprises:
- a first network subscriber (101) that has at least one respective first address allocated in at least one of the address ranges (GUA, ULA, LLA), wherein a first guideline (121) that is stored in the first network subscriber (101) stipulates which of the allocated first addresses needs to be used for communication with the other network subscribers (101, 102, 103);
- a second network subscriber (102) that has at least one respective second address allocated in at least one of the address ranges (GUA, ULA, LLA), wherein a second guideline (122) that is stored in the second network subscriber (102) stipulates which of the allocated second addresses needs to be used for communication with the other network subscribers (101, 102, 103);
in which checking the availability of the second network subscriber (102) to the first network subscriber (101) involves the following steps being performed:
a) the first network subscriber (101) resolves a name of the second network subscriber (102), wherein the result obtained for the name resolution is the addresses of the address range(s) (GUA, ULA, LLA) that are allocated to the second network subscriber (102);
b) an address list is produced using weighted address sorting from the addresses obtained in step a), so that the obtained addresses are sorted in ascending or descending order in accordance with their availability;
c) for each of the addresses that the address list contains, separate examination of the communication capability between the first network subscriber (101) and the second network subscriber (102) is performed, wherein
- the communication capability between the first network subscriber (101) and the second network subscriber (102) is examined by a diagnosis tool (202) that sends a ping to each obtained address of the second network subscriber (102) sequentially,
- the pings are sequentially sent to the obtained addresses in the order of their weighted sorting,
- the weighted address sorting is used to identify unavailable addresses of the second network subscriber and a ping examination is dispensed with for these unavailable addresses, and
- the communication capability between the first network subscriber (101) and the second network subscriber (102) is examined under the control of a computation unit (203) that controls the diagnosis tool (202);
d) the result of the examination is evaluated and provided.

2. Method according to Claim 1, in which sequential sending of the pings prompts the sending to the obtained addresses differently than the order of their weighted sorting if equally weighted addresses of one or different address ranges are present.

3. Method according to either of Claims 1 and 2, in which the check on the availability is performed by a diagnosis application (208) that is executed on the first network subscriber (101).

4. Method according to Claim 3, in which the diagnosis application (208) performs the method by interchanging messages with an IP stack (201) directly or via a web server (221).

5. Method according to one of the preceding claims, in which the name of the second network subscriber (102) is resolved by a means for name resolution (205) that executes DNS and/or mDNS and/or Profinet DCP.

6. Method according to one of the preceding claims, in which the address list is produced such that it comprises respective associated source addresses of the first network subscriber (101) for the obtained addresses of the second network subscriber (102).

7. Method according to one of the preceding claims, in which the guidelines (121, 122; 207) that are stored in the respective network subscribers (101, 102) are read by the diagnosis application (208).

8. Method according to one of the preceding claims, in which only one of the obtained addresses of the second network subscriber (102) is examined for each address range.

9. Method according to one of the preceding claims, in which an examined address is denoted as unavailable if it has no existing associated source address of the first network subscriber (101).

10. Method according to one of the preceding claims, in which the result of the examination is stored in a result memory (206) that is read by the diagnosis application (208) following performance of the examination, and the result of the examination is provided, particularly in the form of a list.

11. Method according to Claim 10, in which a plurality of examined addresses that are associated with one and the same address level are combined in the result, particularly the list.

12. Network subscriber (101, 102) for an IP-based network (100), in which each of the network subscribers (101, 102) can be allocated, in one or more address ranges (GUA, ULA, LLA), at least one respective address at which the relevant network subscriber (101, 102) is available to another network subscriber (101, 102, 103), wherein the network (100) comprises:
- a first network subscriber (101) that has at least one respective first address allocated in at least one of the address ranges (GUA, ULA, LLA), wherein a first guideline (121) that is stored in the first network subscriber (101) stipulates which of the allocated first addresses needs to be used for communication with the other network subscribers (101, 102, 103);
- a second network subscriber (102) that has at least one respective second address allocated in at least one of the address ranges (GUA, ULA, LLA), wherein a second guideline (122) that is stored in the second network subscriber (102) stipulates which of the allocated second addresses needs to be used for communication with the other network subscribers (101, 102, 103);
wherein the network subscriber acting as the first network subscriber (101) comprises the following:
a) a first means (M1) that can resolve a name of the second network subscriber (102), wherein the result obtained for the name resolution is the addresses of the address range(s) (GUA, ULA, LLA) that are allocated to the second network subscriber (102);
b) a second means (M2) that can produce an address list using weighted address sorting from the addresses obtained in step a), so that the obtained addresses are sorted in ascending or descending order in accordance with their availability;
c) a third means (M3) that, for each of the addresses that the address list contains, can perform separate examination of the communication capability between the first network subscriber (101) and the second network subscriber (102), wherein
- the communication capability between the first network subscriber (101) and the second network subscriber (102) is examined by a diagnosis tool (202) that sends a ping to each obtained address of the second network subscriber (102) sequentially,
- the pings are sequentially sent to the obtained addresses in the order of their weighted sorting and
- the communication capability between the first network subscriber (101) and the second network subscriber (102) is examined under the control of a computation unit (203) that controls the diagnosis tool (202);
d) a fourth means (M4) that can evaluate and provide the result of the examination.

13. IP-based network having a plurality of network subscribers (101, 120), in which each of the network subscribers (101, 102) can be allocated, in one or more address ranges (GUA, ULA, LLA), at least one respective address at which the relevant network subscriber (101, 102) is available to another network subscriber (101, 102, 103), wherein the network (100) comprises:
- a first network subscriber (101) that has a respective first address allocated in at least one of the address ranges (GUA, ULA, LLA), wherein a first guideline (121) that is stored in the first network subscriber (101) stipulates which of the allocated first addresses needs to be used for communication with the other network subscribers (101, 102, 103);
- a second network subscriber (102) that has a respective second address allocated in at least one of the address ranges (GUA, ULA, LLA), wherein a second guideline (122) that is stored in the second network subscriber (102) stipulates which of the allocated second addresses needs to be used for communication with the other network subscribers (101, 102, 103);
wherein at least the first network subscriber (101) is in a form according to Claim 12.

## Revendications

1. Procédé de diagnostic de l'accessibilité de participants (101, 102) à un réseau dans un réseau (100), basé sur IP, dans lequel, à chaque participant (101, 102) au réseau, peut être affecté, dans un ou dans plusieurs domaines (GUA, ULA, LLA) d'adresses, au moins une adresse respective, à laquelle le participant (101, 102) au réseau concerné peut être atteint pour un autre participant (101, 102, 103) au réseau, le réseau (100) comprenant :
- un premier participant (101) au réseau, auquel au moins une première adresse est affectée dans au moins l'un des domaines (GUA, ULA, LLA) d'adresses, dans lequel il est fixé, par une première directive (121) mémorisée dans le premier participant (101) au réseau, celle des premières adresses affectées à utiliser pour une communication avec les autres participants (101, 102, 103) au réseau;
- un deuxième participant (102) au réseau, auquel est affectée, dans au moins l'un des domaines (GUA, ULA, LLA) d'adresses, au moins une deuxième adresse, dans lequel, par une deuxième directive (122), mémorisée dans le deuxième participant (102) au réseau, il est fixé celle des deuxièmes adresses affectées à utiliser pour une communication avec les autres participants (101, 102, 103) au réseau;
dans lequel, pour contrôler l'accessibilité au deuxième participant (102) au réseau, par le premier participant (101) au réseau, on effectue les stades suivants :
a) on résout, par le premier participant (101) au réseau, une dénomination du deuxième participant (102) au réseau, en obtenant, en résultat de la résolution de dénomination, les adresses, affectées au deuxième participant (102) au réseau, du domaine ou des domaines (GUA, ULA, LLA) d'adresses;
b) à partir des adresses obtenues au stade a), on produit une liste d'adresses avec un classement d'adresses pondéré, de manière à classer, en ordre croissant ou décroissant, les adresses obtenues, conformément à leur accessibilité;
c) pour chaque adresse contenue dans la liste d'adresses, on effectue un contrôle séparé de la possibilité à la communication entre le premier participant (101) au réseau et le deuxième participant (102) au réseau, dans lequel
- le contrôle de la possibilité à la communication, entre le premier participant (101) au réseau et le deuxième participant (102) au réseau, s'effectue par un outil (202) de diagnostic, par lequel on envoie séquentiellement un ping à chaque adresse obtenue du deuxième participant (102) au réseau,
- un envoi séquentiel du ping aux adresses obtenues s'effectue successivement suivant leur classement pondéré,
- à l'aide du classement d'adresses pondéré, on détecte des adresses inaccessibles du deuxième participant au réseau et on se dispense d'un contrôle ping pour ces adresses inaccessibles et
- le contrôle de la possibilité de communication, entre le premier participant (101) au réseau et le deuxième participant (102) au réseau, s'effectue sous la commande d'une unité (203) informatique, qui commande l'outil (202) de diagnostic;
d) on exploite et on met à disposition le résultat du contrôle.

2. Procédé suivant la revendication 1, dans lequel, dans l'envoi séquentiel du ping, l'envoi aux adresses obtenues s'effectue en s'écartant de la succession de leur classement pondéré s'il y a des adresses de même pondération d'un domaine d'adresses ou de domaines d'adresses différents.

3. Procédé suivant l'une des revendications 1 ou 2, dans lequel on effectue le contrôle de l'accessibilité par une application (208) de diagnostic, qui est réalisée sur le premier participant (101) au réseau.

4. Procédé suivant la revendication 3, dans lequel l'application (208) de diagnostic échange, pour effectuer le procédé, des messages avec un IP-Stack (201) directement ou par un serveur (221) web.

5. Procédé suivant l'une des revendications précédentes, dans lequel la résolution de la dénomination du deuxième participant (102) au réseau s'effectue par un moyen de résolution (205) de dénomination, qui réalise DNS et/ou mDNS et/ou Profinet DCP.

6. Procédé suivant l'une des revendications précédentes, dans lequel on produit la liste d'adresses, de manière à ce que celle-ci comprenne, par rapport aux adresses obtenues du deuxième participant (102) au réseau, des adresses sources associées respectivement du premier participant (101) au réseau.

7. Procédé suivant l'une des revendications précédentes, dans lequel les directives (121, 122; 207) mémorisées dans les participants (101, 102) respectifs au réseau sont lues par l'application (208) de diagnostic.

8. Procédé suivant l'une des revendications précédentes, dans lequel on ne contrôle, pour chaque domaine d'adresses, que l'une des adresses obtenues du deuxième participant (102) au réseau.

9. Procédé suivant l'une des revendications précédentes, dans lequel on caractérise une adresse contrôlée comme inaccessible s'il n'existe pas d'adresse source associée à celle-ci du premier participant (101) au réseau.

10. Procédé suivant l'une des revendications précédentes, dans lequel on mémorise le résultat du contrôle dans une mémoire (206) de résultat, qui est lue par l'application (208) de diagnostic après que le contrôle est effectué et on met le résultat du contrôle à disposition, notamment sous la forme d'une liste.

11. Procédé suivant la revendication 10, dans lequel on rassemble dans le résultat, notamment dans la liste, plusieurs adresses contrôlées, qui sont associées à un même plan d'adresses.

12. Participants (101, 102) à un réseau pour un réseau (100) basé sur IP, dans lequel, à chaque participant (101, 102) au réseau peut être affectée, dans un domaine ou dans plusieurs domaines (GUA, ULA, LLA) d'adresses, au moins une adresse respective, à laquelle le participant (101, 102) au réseau concerné peut être atteint pour un autre participant (101, 102, 103) au réseau, le réseau (100) comprenant :
- un premier participant (101) au réseau, auquel au moins une première adresse est affectée dans au moins l'un des domaines (GUA, ULA, LLA) d'adresses, étant fixé, par une première directive (121) mémorisée dans le premier participant (101) au réseau, celle des premières adresses affectées à utiliser pour une communication avec les autres participants (101, 102, 103) au réseau;
- un deuxième participant (102) au réseau, auquel est affectée, dans au moins l'un des domaines (GUA, ULA, LLA) d'adresses, au moins une deuxième adresse, étant fixé, par une deuxième directive (122), mémorisée dans le deuxième participant (102) au réseau, celles des deuxièmes adresses affectées à utiliser pour une communication avec les autres participants (101, 102, 103) au réseau;
dans lequel le participant au réseau servant de premier participant (101) au réseau comprend ce qui suit :
a) un premier moyen (M1) par lequel une dénomination du deuxième participant (102) au réseau peut être résolue, en obtenant, comme résultat de la résolution de dénomination, les adresses, affectées au deuxième participant (102) au réseau, du domaine d'adresses ou des domaines d'adresses (GUA, ULA, LLA);
b) un deuxième moyen (M2) par lequel il peut être obtenu, à partir des adresses obtenues dans le stade a), une liste d'adresses ayant un classement d'adresses, de manière à ce que les adresses obtenues soient classées, de manière croissante ou décroissante, en fonction de leur accessibilité;
c) un troisième moyen (M3) par lequel, pour chacune des adresses contenues dans la liste d'adresses, un contrôle séparé de la possibilité de communication entre le premier participant (101) au réseau et le deuxième participant (102) au réseau peut être effectué, dans lequel
- le contrôle de la possibilité de communication entre le premier participant (101) au réseau et le deuxième participant (102) au réseau s'effectuant par un outil (202) de diagnostic, par lequel un ping est envoyé séquentiellement à chaque adresse obtenue du deuxième participant (102) au réseau,
- un envoi séquentiel du ping aux adresses obtenues s'effectuant dans la succession de leur classement pondéré et
- le contrôle de la possibilité de communication entre le premier participant (101) au réseau et le deuxième participant (102) au réseau s'effectuant sous la commande d'une unité (203) informatique, qui commande l'outil (202) de diagnostic;
d) un quatrième moyen (M4), par lequel le résultat du contrôle peut être exploité et être mis à disposition.

13. Réseau basé sur IP, comprenant plusieurs participants (101, 102) au réseau, dans lequel, à chaque participant (101, 102) au réseau peut être affectée, dans un domaine ou dans plusieurs domaines (GUA, ULA, LLA) d'adresses, au moins une adresse à laquelle le participant (101, 102) au réseau concerné peut être accessible pour un autre participant (101, 102, 103) au réseau, le réseau (100) comprenant :
- un premier participant (101) au réseau, auquel est affectée, dans au moins l'un des domaines (GUA, ULA, LLA) d'adresses, une première adresse, dans lequel il est fixé, par une première directive mémorisée dans le premier participant (101) au réseau, celle des premières adresses affectées à utiliser pour une communication avec les autres participants (101, 102, 103) au réseau;
- un deuxième participant (102) au réseau, auquel est affectée, dans au moins l'un des domaines (GUA, ULA, LLA) d'adresses, une deuxième adresse, dans lequel il est fixé par une deuxième directive (122) mémorisée dans le deuxième participant (102) au réseau, celle des deuxièmes adresses affectées à utiliser pour une communication avec les autres participants (101, 102, 103) au réseau;
dans lequel au moins le premier participant (101) au réseau est constitué suivant la revendication 12.
